# EUROPEAN PATENT SPECIFICATION

(11) **EP 4 354 213 B1**
(45) Date of publication and mention of the grant of the patent: **17.06.2026**
(21) Application number: 22201169.4
(22) Date of filing: 12.10.2022
(51) Int. Cl.: G02F 1/133, G02F 1/163, B60J 3/04, E06B 9/24

(54) **TRANSPARENT ROOF ASSEMBLY COMPRISING A SEGMENTED OPTICALLY SWITCHABLE PANEL**
TRANSPARENTE DACHANORDNUNG MIT EINER SEGMENTIERTEN OPTISCH SCHALTBAREN PLATTE
ENSEMBLE TOIT TRANSPARENT COMPRENANT UN PANNEAU SEGMENTÉ OPTIQUEMENT COMMUTABLE

(43) Date of publication of application: 17.04.2024
(73) Proprietor: Inalfa Roof Systems Group B.V., 5807 GW Oostrum (NL)
(72) Inventor: Keukens, Erik Antonius Gerardus, 5653 JL Eindhoven (NL)
(74) Representative: De Vries & Metman

(56) References cited:
- EP-A1- 4 194 237
- WO-A2-2007/146862
- US-A1- 2021 356 772
- US-A1- 2022 250 448

## Description

The invention relates to a transparent roof assembly for a vehicle roof and in particular to such a transparent roof assembly comprising a segmented optically switchable panel.

An open-roof assembly is well-known. The open-roof assembly is configured to be mounted in a vehicle roof and comprises at least one moveably arranged closure member. The closure member is configured and arranged to cover an opening in the vehicle roof or at least partly uncover the opening in the vehicle roof. Usually, but not necessarily, the closure member is a transparent panel and comprises glass or a suitable plastics. The closure member may be configured to tilt or to slide.

Further, it is known to provide a fixed, usually transparent panel in the vehicle roof of a passenger compartment to enable a sky view through the roof of the vehicle, for example, for any occupants in the passenger compartment.

In either of the above-mentioned vehicle roofs, a transparent panel may be optically switchable. An optically switchable panel, as used herein, is a panel of which an optical property may be changed e.g. by an occupant. In particular, the optical property of the optically switchable panel may be changed by application of an electric field. Different kinds of such an optically switchable panel are known. For example, an electrochromic panel is known. Further, a number of kinds of such a panel that apply a liquid crystal layer are known. Some examples of the latter kind comprise a PDLC (polymer dispersed liquid crystal) layer, a SPD (suspended particle device) layer or a GHLC (guest host liquid crystal) layer.

The optically switchable panel may comprise two electrode layers between which an optically switchable material is provided. A suitable electric voltage may be applied on these electrodes to thereby provide an electric field between the electrodes. The electric field induces the change of the optical property of the optically switchable material.

Depending on the kind of switchable material applied, the electric voltage may be preferred to be an alternating (AC) voltage or a DC voltage. Further, a preferred voltage level may be dependent on the kind of switchable material and other properties. Usually, however, the voltage level is relatively high, i.e. higher than a battery voltage of a vehicle. So, the voltage level may need to be transformed to a higher voltage and/or may be transformed from a DC voltage to an AC voltage.

For a segmented optically switchable panel, which comprises multiple segments that may be optically switched independently from each other, a relatively large number of individual connections between a driver circuitry and the optically switchable panel are needed. In particular as drive voltage circuitry for transforming the low DC battery voltage to the needed higher drive voltage may be relatively large and heavy for mounting such circuitry on the segmented optically switchable panel, it may be preferred to mount the drive voltage circuitry on a frame of the transparent roof assembly. Providing a wire for each segment of the optically switchable panel results in many wires, taking up space. Moreover, the wiring is preferred to be removed from view such that a transparent part of the segmented optically switchable panel needs to be reduced in size.

It is known to provide a switching circuitry on the segmented optically switchable panel such that the drive voltage may be supplied to the switching circuitry by only two wires, while the many wires to the segments are arranged on the segmented optically switchable panel. It may however not be preferred to maintain the relatively high drive voltage constantly, but e.g. only when the drive voltage is needed to operate one or more segments of the segmented optically switchable panel, thereby reducing power consumption.

US 2022/0250448 relates to a similar roof assembly for a vehicle roof.

In a first aspect, a transparent roof assembly for a vehicle roof according to claim 1 is provided. The transparent roof assembly comprises a segmented optically switchable panel, a drive voltage circuitry and a switching circuitry. The segmented optically switchable panel comprises at least two independently switchable segments, each segment comprising a first optical state and a second optical state different from the first optical state. The drive voltage circuitry comprises a voltage input terminal for receiving a system voltage; a ground level input terminal for receiving a system ground; a voltage output terminal for supplying a phase signal of a drive voltage for switching between the first optical state and the second optical state; and a neutral output terminal for supplying a neutral signal of the drive voltage. The switching circuitry is configured to receive a command signal representing a user command indicating a desired optical state of each of the switchable segments and the switching circuitry comprises a system voltage input terminal for receiving the system voltage; a system ground input terminal for receiving the system ground; a phase input terminal for receiving the phase signal of the drive voltage; a neutral input terminal for receiving the neutral signal of the drive voltage; and at least two switching circuit output terminals for selectively operating the switchable segments corresponding to the command signal. Further, the switching circuitry is configured to control the supply of the drive voltage by the drive voltage circuitry. The present disclosure distinguishes from the above identified prior art publication in that the switching circuitry is configured to control the supply of the drive voltage by the drive voltage circuitry to the switching circuitry.

In order to operate the optically switchable panel, the needed drive voltage, either AC or DC, is generated in the drive voltage circuitry, providing the drive voltage at its voltage output terminal and its neutral output terminal. For individually switching a number of segments of the segmented optically switchable panel, a switching circuitry is provided, which comprises a number of switching circuitry output terminals adapted to individually switch a corresponding number of segments of the segmented optically switchable panel. Preferably, the number of switching circuit output terminals corresponds to or exceeds the number of segments such that each segment is individually switchable. It is noted that, as apparent to those skilled in the art, the switching circuitry may switch the phase signal of the drive voltage or may switch the neutral signal of the drive voltage.

The command signal representing the user command, which may indicate which segments need to be in the first optical state and which segments need to be in the second or even another optical state, is received at the switching circuitry. For example for safety reasons or to reduce power consumption, it may be preferred to remove the high drive voltage from the wiring between the drive voltage circuitry and the switching circuitry, when the high drive voltage is not needed for operating the optically switchable panel.

The switching circuitry is provided with the user command and is thus enabled to determine whether the drive voltage is needed for operation or not. To keep control logic relatively simple and hence cost effective, the switching circuitry and the drive voltage circuitry are designed such that the switching circuitry may instruct the drive voltage circuitry to either supply or not supply the drive voltage.

In an embodiment of the transparent roof assembly, the switching circuitry is configured to selectively connect the neutral input terminal to either the system ground or to the system voltage and the drive voltage circuitry is configured to compare a voltage on the neutral output terminal with the system voltage and the system ground to detect the voltage on the neutral output terminal and to switch the drive voltage depending on the voltage detected on the neutral output terminal.

In order to keep a number of wires between the drive voltage circuitry and the switching circuitry as small as possible, the switching circuitry is configured to selectively connect the neutral input terminal to either the system ground or to the system voltage, which is detectable at the coupled neutral output terminal of the drive voltage circuitry. The drive voltage circuitry is configured to compare the voltage on the neutral output terminal with the system voltage and the system ground to detect whether the voltage on the neutral output terminal corresponds to the system ground or to the system voltage. Depending on the voltage detected on the neutral output terminal, the drive voltage circuitry switches the drive voltage on the voltage output terminal and the neutral output terminal or removes the drive voltage from the voltage output terminal and the neutral output terminal. Thus, without additional wiring, the switching circuitry is enabled to instruct the drive voltage circuitry.

In an embodiment, the transparent roof assembly comprises a frame and the segmented optically switchable panel is arranged moveably relative to the frame, wherein the drive voltage circuitry is arranged on the frame and the switching circuitry is arranged on the segmented optically switchable panel. A flexible cabling is functionally coupled between the drive voltage circuitry and the switching circuitry. To keep a number of wires between the statically arranged frame and the moveably arranged segmented optically switchable panel small, it may be desired to mount the switching circuitry on the segmented optically switchable panel. However, the drive voltage circuitry may be relatively large and may therefore be desired not to be mounted on the segmented optically switchable panel.

In an embodiment, the transparent roof assembly comprises a user command panel, the user command panel being configured to receive the user command and to generate the command signal and the user command panel being functionally coupled to the switching circuitry for supplying the command signal. The user command panel may be mounted on the segmented optically switchable panel or on a frame of the transparent roof assembly, for example. In another embodiment, the user command panel may be integrated in a dashboard of the vehicle or any other part of the vehicle. In a particular embodiment of the transparent roof assembly, wherein the segmented optically switchable panel comprises the user command panel, the user command panel may comprise mechanically operated switches or electronically operated switches like touch-sensitive switches. Such switches may be mounted on the segmented optically switchable panel or be integrated in the segmented optically switchable panel, e.g. being arranged between two glass plies, or the like.

In a particular embodiment of the transparent roof assembly, the user command panel is electrically coupled to the drive voltage circuitry for supplying the command signal to the drive voltage circuitry. Further, the drive voltage circuitry comprises a modulation circuitry, the modulation circuitry being configured to modulate the drive voltage in accordance with the command signal and the switching circuitry comprises a demodulation circuitry to demodulate the drive voltage to thereby retrieve and receive the command signal. If the user command panel is not mounted on the segmented optically switchable panel, a number of wires to the segmented optically switchable panel may be reduced by providing the command signal by modulating the drive signal. Modulating may include that the modulation circuitry modulates at least one of an amplitude of the drive voltage, a frequency of the drive voltage and a duty cycle of the drive voltage.

In an embodiment, the transparent roof assembly comprises a frame, a first transparent panel and a second transparent panel, the first transparent panel comprising a segmented optically switchable panel and the second transparent panel comprising an optically switchable panel, wherein the drive voltage circuitry is arranged on the frame, and wherein the switching circuitry is arranged on the first transparent panel. In a particular embodiment thereof, the second transparent panel comprises a segmented optically switchable panel and a further switching circuitry is arranged on the second transparent panel.

In an aspect, a vehicle comprising an embodiment of the above-described vehicle roof assembly is provided.

In an embodiment, the vehicle comprises a vehicle body and the transparent roof assembly comprises a frame mounted on the vehicle body, the segmented optically switchable panel being arranged moveably relative to the frame, wherein the drive voltage circuitry is arranged on the vehicle body and the switching circuitry is arranged on the segmented optically switchable panel, a flexible cabling being functionally coupled between the drive voltage circuitry and the switching circuitry. Thus, the drive voltage circuitry may be arranged anywhere in the vehicle, which may allow for more freedom of design, for example, as the size and shape may be less restricted than when mounted in or on the roof assembly.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention, which is defined by the appended claims, will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2A: illustrates a circuit diagram of a first embodiment of circuitry for use with a transparent roof assembly having a segmented optically switchable transparent panel;
- Fig. 2B: illustrates a circuit diagram of a second embodiment of circuitry for use with a transparent roof assembly having a segmented optically switchable transparent panel;
- Fig. 3A: illustrates a circuit diagram of a third embodiment of circuitry for use with a transparent roof assembly having a segmented optically switchable transparent panel;
- Fig. 3B: illustrates a circuit diagram of a fourth embodiment of circuitry for use with a transparent roof assembly having a segmented optically switchable transparent panel;
- Fig. 4: shows a perspective view of a fifth embodiment of a transparent roof assembly.

The present invention will now be described with reference to the accompanying drawings, wherein the same reference numerals have been used to identify the same or similar elements throughout the several views.

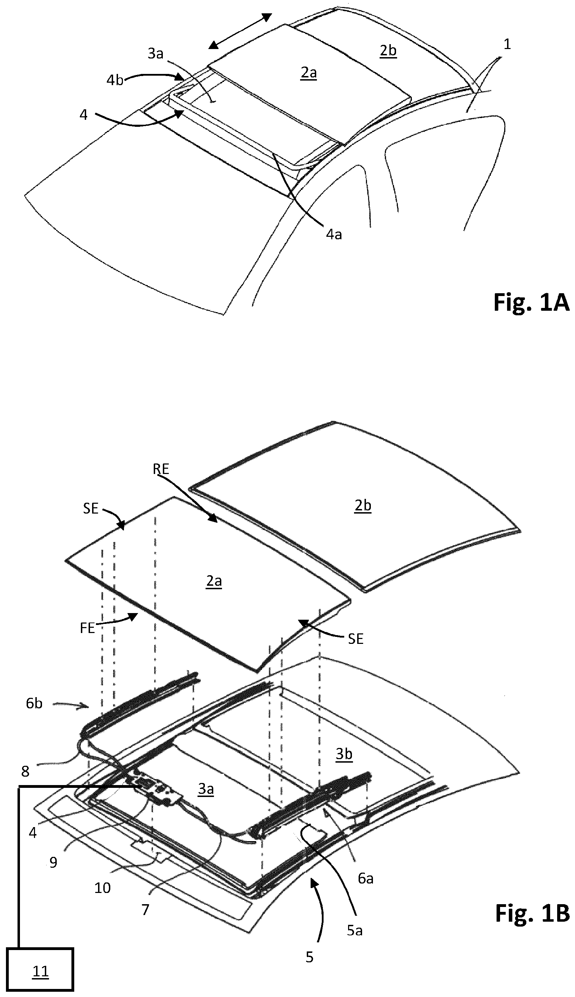

Fig. 1A illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior passenger compartment through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a electric motor 9.

The drive cables 7, 8 couple the electric motor 9 to the mechanisms of the respective guide assemblies 6a, 6b such that upon operating the electric motor 9, the mechanisms start to move. In particular, a core of the drive cable 7, 8 is moved by the electric motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, an electric motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the electric motor 9 is mounted near or below the front end FE of the moveable panel 2a at a recess 10. In another embodiment, the electric motor 9 may be positioned at any other suitable position or location. For example, the electric motor 9 may be arranged near or below the rear end RE of the moveable panel 2a or below the fixed panel 2b.

A control module 11 is schematically illustrated and is operatively coupled to the electric motor 9. The control module 11 may be any kind of processing module, either a software controlled processing module or a dedicated processing module, like an ASIC, which are both well known to those skilled in the art. The control module 11 may be a stand-alone control module or it may be operatively connected to another control module, like a multipurpose, generic vehicle control module. In yet another embodiment, the control module 11 may be embedded in or be part of such a generic vehicle control module. Essentially, the control module 11 may be embodied by any control module suitable for, capable of and configured for performing operation of the electric motor 9 and thus the moveable roof assembly.

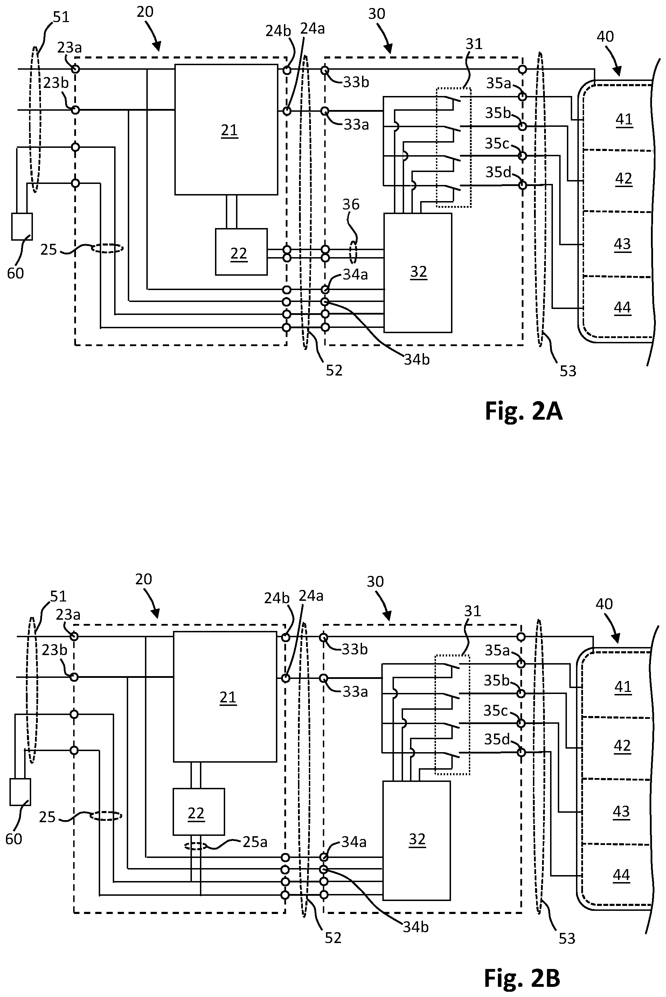

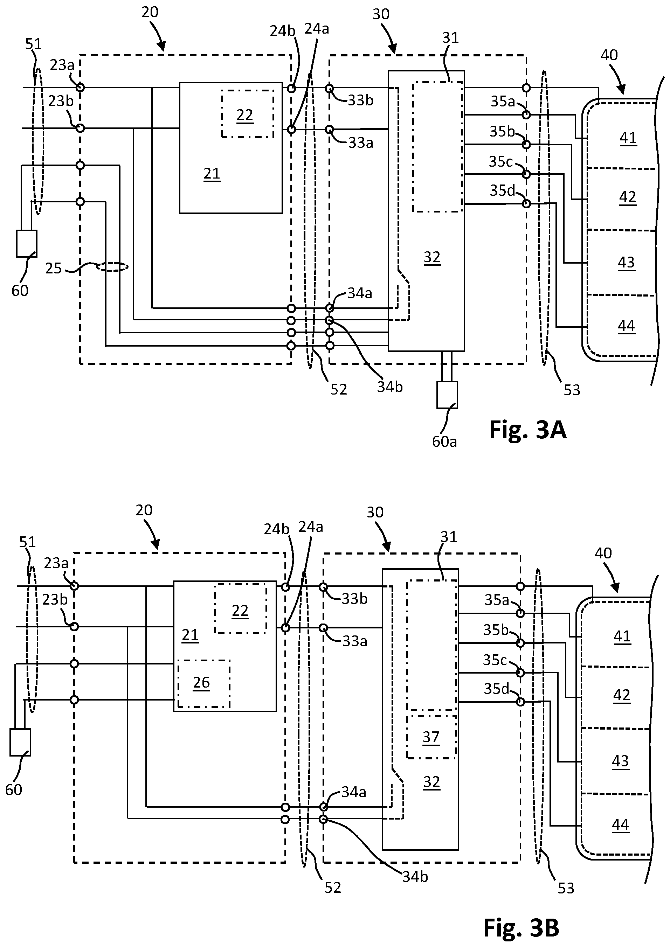

Either or both of the moveable panel 2a and the fixed panel 2b may be an optically switchable transparent panel. Figs. 2A, 2B, 3A and 3B illustrate respective embodiments of a driver circuitry for driving and operating an optically switchable layer present in such an optically switchable transparent panel, as well known in the art. Such known layers include a PDLC, SPD, GHLC and electrochromic layers and other layers having optically switchable properties. An optically switchable material is operated by applying an electric field by application of a drive voltage between at least two electrode layers, between which the optically switchable material is arranged. As such optically switchable layers are well known in the art, a more detailed description thereof is omitted herein.

Referring to Fig. 2A, in a first embodiment of the above-mentioned driver circuitry, a drive voltage circuit 20 and a switching circuitry 30 are connected in series with a segmented optically switchable panel 40. The segmented optically switchable panel 40 comprises four segments that are individually switchable: a first segment 41, a second segment 42, a third segment 43 and a fourth segment 44.

The drive voltage circuitry 20 comprises a voltage input terminal 23a and a ground level input terminal 23b for receiving a system voltage, which usually corresponds to a battery voltage of about 12 V. Further, the drive voltage circuitry 20 comprises a voltage output terminal 24a and a neutral output terminal 24b for supplying a phase signal and a neutral signal, respectively, of the drive voltage to the switching circuitry 30. A communication line 25 is shown to run through the drive voltage circuitry 20, although the communication line 25 may not be regarded a part of the drive voltage circuitry 20 as it is not directly connected to other parts of the drive voltage circuitry 20. The communication line 25 may comprise one or more conductive leads (two are shown) and may use any kind of communication protocol. In a vehicle, commonly a bus communication using a LIN protocol or a CAN protocol is used, but other protocols and communication types may be applied as well.

The drive voltage circuitry 20 comprises a drive voltage generation module 21 for generating the drive voltage from the system voltage. For example, the voltage level may be increased from 12 V to a higher voltage, e.g. 30 V, 50 V, 70 V or an even higher voltage. Further, a DC system voltage may be transformed to an AC voltage. The drive voltage is supplied to a voltage output terminal 24a and a neutral output terminal 24b, wherein the neutral output terminal 24b is supplied with a ground level (herein also referred to as a neutral signal) of the drive voltage, while the voltage output terminal 24a is supplied a phase signal, i.e. a voltage level different from the ground level.

The drive voltage circuitry 20 further comprises a communication module 22, which is configured to receive an instruction signal, to interpret the instruction signal and to control the drive voltage generation module 21 in accordance with the instruction signal.

The switching circuitry 30 comprises a number of switches 31. In this illustrated embodiment, four switches 31 are shown, which number corresponds to the number of four segments 41 - 44 of the segmented optically switchable panel 40. The number of switches 31 are each connected to a respective one of the four segments 41 - 44 through a respective one of a number (in this embodiment four) of switching output terminals 35a - 35d. The phase signal of the drive voltage received at a phase input terminal 33a is selectively couplable to one or more of the segments 41 - 44 by selectively operating the respective switches 31. The neutral signal of the drive voltage is received at a neutral input terminal 33b and is supplied through a suitable connection to a ground-level electrode of the segmented optically switchable panel 40.

The number of switches 31 are controlled by a controller unit 32, which is connected to each one of the number of switches 31. Further, the controller unit 32 is connected to the communication line 25 for receiving a user command signal from a user command panel 60. The user command panel 60 is designed and configured to receive a user input indicating a desired state of the optically switchable segments 41 - 44 and to generate a corresponding user command signal. The user command signal may represent the desired state of each of the segments 41 - 44 or may represent a desired change in status of one or more of the segments 41 - 44. Any other relevant data or instructions may be received through the communication line 25 as well. For example, a shutdown of the vehicle may be communicated, in response to which the controller unit 32 may initiate a low-power mode of the drive voltage circuitry 20, the switching circuitry 30 and the segmented optically switchable panel 40. Further, depending on a practical embodiment of the communication line 25, the communication line 25 may be dedicated to the optically switchable panel 40 and its control such that only the user command panel 60 is connected to the communication line 25 as shown. In another embodiment, however, one or more other devices may be connected as well using the communication line 25 for communicating with other elements and devices unrelated to the operation of the optically switchable panel 40.

The switching circuitry 30 receives the system voltage, e.g. battery voltage, at a system voltage input terminal 34a and a system ground voltage terminal 34b. In the illustrated embodiment, the system voltage is supplied to the controller unit 32 for enabling operation thereof, while in practice the system voltage may be supplied to other parts of the switching circuitry 30 as well as apparent to those skilled in the art.

The controller unit 32 is further connected to the communication module 22 through an instruction line 36 to supply the above-mentioned instruction signal to the communication module 22. The controller unit 32 is enabled to control the drive voltage circuitry 20 through the instruction signal. In particular, the instruction signal may instruct the drive voltage circuitry 20 to generate and supply the drive voltage as it may be needed to operate one or more of the segments 41 - 44 or may instruct the drive voltage circuitry 20 to cease supply of the drive voltage as it may no longer be needed to operate one or more of the segments 41 - 44. In particular embodiments the instruction signal may also comprise other instructions. For example, a dimming instruction may be supplied such that a lower drive voltage may be generated and supplied such that the segments are not put in the first optical state or the second optical state, but are put in a third, intermediate optical state.

A first wiring harness 51 may be provided to connect the system voltage and the communication line 25 to the drive voltage circuitry 20. A second wiring harness 52, comprising eight electrically conductive leads or wires, is used to connect the drive voltage circuitry 20 to the switching circuitry 30. A third wiring harness 53 connects the segments 41 - 44 and the ground-level electrode thereof to the switching circuitry 30. The third wiring harness 53 may be embodied in practice as a printed circuit on a circuit board, or the like. So, herein, the term 'wiring harness' should be interpreted broadly as a set of electrically conductive leads or wires.

In an embodiment wherein the number of segments is larger that the illustrated embodiment of four segments, e.g. an embodiment comprising 10 segments, the number of conductive leads in the third wire harness 53 increases significantly. If in such embodiment the segmented optically switchable panel 40 is moveably arranged, a wiring between the switching circuitry 30 and the moveably arranged panel 40 becomes large and relatively stiff, thereby hampering a smooth running of the moveable panel 40 and reducing a size of a transparent area of the panel 40 as more cabling needs to be removed from view. Therefor, it may be preferred to mount the switching circuitry 30 on the moveable panel 40 as the switching circuitry 30 may be embodied in a relatively small package, e.g. a semiconductor chip, or the like, and using a printed circuit on a thin foil, or the like, for the third wiring harness 53. In such embodiment, the number of segments of the segmented optically switchable panel 40 does not affect the number of leads in the second wiring harness 52.

Fig. 2B illustrates a second embodiment of the circuitry for operating a segmented optically switchable panel 40, wherein the number of leads in the second wiring harness 52 is reduced to six leads without affecting the functionality as shown in and described in relation to the embodiment of Fig. 2A.

The embodiment of Fig. 2B is similar to the embodiment of Fig. 2A except that the instruction line 36 is omitted. In this second embodiment, the communication module 22 of the drive voltage circuitry 20 is directly connected to the communication line 25 through a communication sub-line 25a. For example, assuming a bus communication protocol being used on the communication line 25, the controller unit 32 may send the instruction signal to the communication module 22 over the communication line 25. Thus, the number of leads in the second wiring harness may be reduced and a size and stiffness of the second wiring harness may be reduced.

All other parts and functions of the second embodiment correspond to the parts and functions of the first embodiment of Fig. 2A and are therefore not repeated here.

Fig. 3A illustrates a third embodiment, wherein six leads are needed in the second wire harness 52. Compared to the first and second embodiments, the number of switches 31 are illustrated as an integrated part of the controller unit 32. Such integration may also be used in the first and the second embodiments. As apparent to those skilled in the art, the use of a non-integrated number of switches 31, as used in the first and the second embodiment, may be used in the third and fourth embodiments of Figs. 3A and 3B, respectively.

In the third and fourth embodiments of Fig. 3A and 3B, the communication module 22 is illustrated as an integrated part of the drive voltage generation module 21. Such integration may be used in the first and second embodiments as well, while the non-integrated circuitry of the first and second embodiments may be used in the third and fourth embodiments instead of the integrated circuitry, as apparent to those skilled in the art.

In the third embodiment of Fig. 3A, the communication module 22 is operatively coupled to the neutral output terminal 24b and is not coupled to a dedicated communication line. The controller unit 32 is coupled to the neutral input terminal 33b and is configured to electrically connect the neutral input terminal 33b to the system ground input terminal 34b or to the system voltage input terminal 34a. The communication module 22 is configured to detect whether a voltage level on the neutral output terminal 24b corresponds to the system voltage level or to the system ground level.

The communication module 22 may be configured to control the drive voltage generation module 21 to output the drive voltage, when the system voltage level is applied to the neutral output terminal 24b. In particular, if the system voltage level is applied using a switch requiring a permanent actuation voltage, any error or malfunctioning may result in a release of the switch and thus removal of the system voltage level from the neutral output terminal 24b. As a result, the drive voltage generation module 21 will cease to output the drive voltage. The relatively high drive voltage will no longer be present on the second wire harness 52. Hence, a dead man switch control functionality for increased safety may be provided.

In another configuration of the communication module 22, the communication module 22 may be configured to be responsive of a change in the voltage level on the neutral output terminal 24b. In yet another configuration, the communication module 22 may be responsive to a predefined sequence of changes or voltage pulses, enabling the controller unit 32 to supply different kinds of instructions, instead of only a desired on or off state of the voltage generation module 21.

In a practical embodiment, an overhead user command panel 60a may be provided on the optically switchable panel 40. For example, a touch sensitive user command panel 60a may be integrated in a laminated glass panel. Such an integrated user command panel 60a may be provided next to or instead of the user command panel 60. The integrated user command panel 60a may be directly coupled to the switching circuitry 30, in particular to the controller unit 32. If the user command panel 60 is omitted and only the integrated user command panel 60a is provided, the communication line 25 may not be needed and may be omitted as well. In such an embodiment, the second wiring harness 52 may comprise only four conductive leads.

In the fourth embodiment illustrated in Fig. 3B, the second wire harness 52 comprises only four conductive leads. Compared to the third embodiment, the communication line 25 is not fed through the second wire harness 52 directly. Instead, the communication line 25 is coupled to a modulation circuitry 26. The modulation circuitry 26 receives any user commands relevant to the operation of the optically switchable panel 40. The user commands are then supplied as the command signal to the voltage output terminal 24a and the neutral output terminal 24b, possibly but not necessarily via the communication module 22. The user commands may be send to the switching circuitry 30 over the second wire harness 52 by modulating the drive voltage (or as a modulated signal when no drive voltage is being supplied). Depending on the kind of drive voltage, an amplitude modulation, a frequency modulation or a duty-cycle modulation may be used. For example, a DC drive voltage may be amplitude modulated; an AC drive voltage may be frequency modulated or duty-cycle modulated. As apparent to those skilled in the art, using a suitable drive voltage and modulation method, the operation of the optically switchable panel 40 will not be affected. For example, using a slightly higher drive voltage level than required for operating the optically switchable panel 40 ensures that any minor voltage drops due to amplitude modulation will not affect the operation.

The controller unit 32 comprises a demodulation circuitry 37, which is coupled to the phase input terminal 33a and the neutral input terminal 33b and which is configured to demodulate the command signal. The command signal is then used by the controller unit 32 to control the number of switches 31 and the drive voltage circuitry 20, in particular the drive voltage generation module 21, in accordance with the command signal.

All other parts and functions of the fourth embodiment correspond to the parts and functions of the third embodiment of Fig. 3A and are therefore not repeated here.

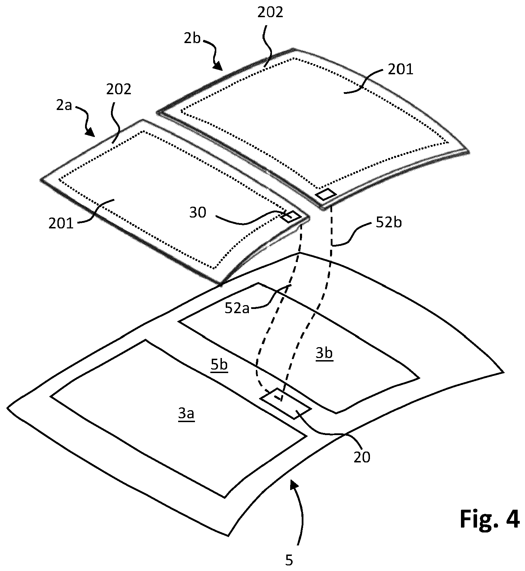

Fig. 4 illustrates an embodiment of a transparent roof assembly comprising a first transparent panel 2a and a second transparent panel 2b arranged over a first roof opening 3a and a second roof opening 3b, respectively. As described in relation to Fig. 1A, the first transparent roof panel 2a may be moveably arranged. For example, the first transparent roof panel 2a may be tiltable and/or slidable. The first roof opening 3a and the second roof opening 3b are provided in the frame 5, which frame 5 further supports the first and second transparent roof panels 2a, 2b.

The first transparent panel 2a may comprise a segmented optically switchable panel. The second transparent panel 2b may comprise an optically switchable panel, that may or may not be segmented. Both panels 2a, 2b need a drive voltage for operating the optically switchable material layer. Therefore, e.g. for cost-effectiveness, a single drive voltage circuitry 20 is provided on the frame 5. In particular, in this embodiment, the drive voltage circuitry 20 is arranged on a middle beam 5b that is arranged below a boundary between the first transparent panel 2a and the second transparent panel 2b, when the transparent panels 2a, 2b are in a closed position, i.e. covering the roof openings 3a, 3b, respectively.

The drive voltage is supplied to each transparent panel 2a, 2b through a suitable wiring 52a, 52b, respectively. At least on the first transparent panel 2a, switching circuitry 30 is provided to control the individual segments. Optionally, similar switching circuitry may be provided on the second transparent panel 2b.

The transparent panels 2a, 2b each comprise a transparent area 201 and a peripheral opaque area 202. The opaque area 202 may be made opaque by application of a polymer layer, for example. The switching circuitry 30 is removed from plain sight by arranging the switching circuitry 30 in the opaque area 202.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. A transparent roof assembly for a vehicle roof, the transparent roof assembly comprising a segmented optically switchable panel (40), a drive voltage circuitry (20) and a switching circuitry (30),
the segmented optically switchable panel comprising at least two independently switchable segments (41 - 44), each segment comprising a first optical state and a second optical state different from the first optical state,
the drive voltage circuitry comprising
- a voltage input terminal (23a) for receiving a system voltage;
- a ground level input terminal (23b) for receiving a system ground;
- a voltage output terminal (24a) for supplying a phase signal of a drive voltage for switching between the first optical state and the second optical state; and
- a neutral output terminal (24b) for supplying a neutral signal of the drive voltage; and
the switching circuitry being configured to receive a command signal representing a user command indicating a desired optical state of each of the switchable segments and comprising
- a system voltage input terminal (34a) for receiving the system voltage;
- a system ground input terminal (34b) for receiving the system ground;
- a phase input terminal (33a) for receiving the phase signal of the drive voltage;
- a neutral input terminal (33b) for receiving the neutral signal of the drive voltage; and
- at least two switching circuit output terminals (35a - 35d) for selectively operating the switchable segments corresponding to the command signal,
wherein the switching circuitry (30) is configured to control the supply of the drive voltage by the drive voltage circuitry (20) to the switching circuitry (30).

2. The transparent roof assembly according to claim 1, wherein the switching circuitry is configured to selectively connect the neutral input terminal to either the system ground or to the system voltage; and
wherein the drive voltage circuitry is configured to compare a voltage on the neutral output terminal with the system voltage and the system ground and to switch the drive voltage depending on the voltage detected on the neutral output terminal.

3. The transparent roof assembly according to claim 1, wherein the transparent roof assembly comprises a frame (5), the segmented optically switchable panel being arranged moveably relative to the frame, wherein the drive voltage circuitry is arranged on the frame and the switching circuitry is arranged on the segmented optically switchable panel, a flexible cabling (52a, 52b) being functionally coupled between the drive voltage circuitry and the switching circuitry.

4. The transparent roof assembly according to claim 1, wherein the transparent roof assembly comprises a user command panel, the user command panel (60, 60a) being configured to receive the user command from a user and to generate the command signal and the user command panel being functionally coupled to the switching circuitry for supplying the command signal to the switching circuitry.

5. The transparent roof assembly according to claim 4, wherein the segmented optically switchable panel comprises the user command panel (60a).

6. The transparent roof assembly according to claim 4, wherein
- the user command panel is electrically coupled to the drive voltage circuitry for supplying the command signal to the drive voltage circuitry;
- the drive voltage circuitry comprises a modulation circuitry (26), the modulation circuitry being configured to modulate the drive voltage in accordance with the command signal; and
- the switching circuitry comprises a demodulation circuitry (37) to demodulate the drive voltage to thereby retrieve and receive the command signal.

7. The transparent roof assembly according to claim 6, wherein the modulation circuitry (26) modulates an amplitude of the drive voltage.

8. The transparent roof assembly according to claim 6, wherein the modulation circuitry (26) modulates a frequency of the drive voltage.

9. The transparent roof assembly according to claim 6, wherein the modulation circuitry (26) modulates a duty cycle of the drive voltage.

10. The transparent roof assembly according to claim 1, wherein the transparent roof assembly comprises a frame (5), a first transparent panel (2a) and a second transparent panel (2b), the first transparent panel comprising the segmented optically switchable panel (40) and the second transparent panel comprising a further optically switchable panel,
wherein the drive voltage circuitry (20) is arranged on the frame, and
wherein the switching circuitry (30) is arranged on the first transparent panel.

11. The transparent roof assembly according to claim 10, wherein the second transparent panel comprises a segmented optically switchable panel and wherein a further switching circuitry is arranged on the second transparent panel.

12. A vehicle comprising the vehicle roof assembly according to claim 1.

13. The vehicle according to claim 12, wherein the vehicle comprises a vehicle body and the transparent roof assembly comprises a frame (5) mounted on the vehicle body, the segmented optically switchable panel (40) being arranged moveably relative to the frame, wherein the drive voltage circuitry is arranged on the vehicle body and the switching circuitry is arranged on the segmented optically switchable panel, a flexible cabling (52, 52a, 52b) being functionally coupled between the drive voltage circuitry and the switching circuitry.

## Patentansprüche

1. Eine transparente Dacheinrichtung für ein Fahrzeugdach, wobei die transparente Dacheinrichtung ein segmentiertes, optisch schaltbares Paneel (40), eine Ansteuerspannungsschaltung (20) und eine Umschalt-Schaltung (30) aufweist,
wobei das segmentierte, optisch schaltbare Paneel mindestens zwei unabhängig voneinander schaltbare Segmente (41-44) aufweist, wobei jedes Segmenteinen ersten optischen Zustand und einen zweiten optischen Zustand, der sich vom ersten optischen Zustand unterscheidet, aufweist,
wobei die Ansteuerspannungsschaltung aufweist
- einen Spannungseingangsanschluss (23a) zum Empfangen einer Systemspannung,
- einen Massepegel-Eingangsanschluss (23b) zum Empfangen einer Systemmasse,
- einen Spannungsausgangsanschluss (24a) zum Liefern eines Phasensignals einer Ansteuerspannung zum Umschalten zwischen dem ersten optischen Zustand und dem zweiten optischen Zustand, und
- einen Neutral-Ausgangsanschluss (24b) zum Liefern eines Neutralsignals der Ansteuerspannung, und
wobei die Umschalt-Schaltung dazu eingerichtet ist, ein Befehlssignal zu empfangen, welches einen Benutzerbefehl darstellt, der einen gewünschten optischen Zustand jedes der schaltbaren Segmente angibt, und aufweist
- einen Systemspannung-Eingangsanschluss (34a) zum Empfangen der Systemspannung,
- einen Systemmasse-Eingangsanschluss (34b) zum Empfangen der Systemmasse,
- einen Phaseneingangsanschluss (33a) zum Empfangen des Phasensignals der Ansteuerspannung,
- einen Neutral-Eingangsanschluss (33b) zum Empfangen des Neutralsignals der Ansteuerspannung, und
- mindestens zwei Umschalt-Schaltung-Ausgangsanschlüsse (35a-35d) zum selektiven Betreiben der schaltbaren Segmente gemäß dem Befehlssignal,
wobei die Umschalt-Schaltung (30) dazu eingerichtet ist, die Zufuhr der Ansteuerspannung durch die Ansteuerspannungsschaltung (20) an die Umschalt-Schaltung (30) zu steuern.

2. Die transparente Dacheinrichtung nach Anspruch 1, wobei die Umschalt-Schaltung dazu eingerichtet ist, den Neutral-Eingangsanschluss wahlweise entweder mit der Systemmasse oder mit der Systemspannung zu verbinden, und
wobei die Ansteuerspannungsschaltung dazu eingerichtet ist, eine Spannung am Neutral-Ausgangsanschluss mit der Systemspannung und der Systemmasse zu vergleichen und die Ansteuerspannung in Abhängigkeit von der am Neutral-Ausgangsanschluss detektierten Spannung zu schalten.

3. Die transparente Dacheinrichtung nach Anspruch 1, wobei die transparente Dacheinrichtung einen Rahmen (5) aufweist, wobei das segmentierte, optisch schaltbare Paneel relativ zum Rahmen bewegbar angeordnet ist, wobei die Ansteuerspannungsschaltung am Rahmen und die Umschalt-Schaltung an dem segmentierten, optisch schaltbaren Paneel angeordnet ist, wobei eine flexible Verkabelung (52a, 52b) funktional zwischen der Ansteuerspannungsschaltung und der Umschalt-Schaltung verbunden ist.

4. Die transparente Dacheinrichtung nach Anspruch 1, wobei die transparente Dacheinrichtung ein Benutzerbefehlsfeld aufweist, wobei das Benutzerbefehlsfeld (60, 60a) dazu eingerichtet ist, den Benutzerbefehl von einem Nutzerzu empfangen und das Befehlssignal zu erzeugen, und wobei das Benutzerbefehlsfeld funktional mit der Umschalt-Schaltung verbunden ist, um das Befehlssignal an die Umschalt-Schaltung zu liefern.

5. Die transparente Dacheinrichtung nach Anspruch 4, wobei das segmentierte, optisch schaltbare Paneel das Benutzerbefehlsfeld (60a) aufweist.

6. Die transparente Dacheinrichtung nach Anspruch 4, wobei
- das Benutzerbefehlsfeld mit der Ansteuerspannungsschaltung elektrisch verbunden ist, um das Befehlssignal an die Ansteuerspannungsschaltung zu liefern,
- die Ansteuerspannungsschaltung eine Modulationsschaltung (26) aufweist, wobei die Modulationsschaltung dazu eingerichtet ist, die Ansteuerspannung gemäß dem Befehlssignal zu modulieren, und
- die Umschalt-Schaltung eine Demodulationsschaltung (37) aufweist, um die Ansteuerspannung zu demodulieren und dadurch das Befehlssignal zu erlangen und zu empfangen.

7. Die transparente Dacheinrichtung nach Anspruch 6, wobei die Modulationsschaltung (26) eine Amplitude der Ansteuerspannung moduliert.

8. Die transparente Dacheinrichtung nach Anspruch 6, wobei die Modulationsschaltung (26) eine Frequenz der Ansteuerspannung moduliert.

9. Die transparente Dacheinrichtung nach Anspruch 6, wobei die Modulationsschaltung (26) einen Tastgrad der Ansteuerspannung moduliert.

10. Die transparente Dacheinrichtung nach Anspruch 1, wobei die transparente Dacheinrichtung einen Rahmen (5), ein erstes transparentes Paneel (2a) und ein zweites transparentes Paneel (2b) aufweist, wobei das erste transparente Paneel das segmentierte optisch schaltbare Paneel (40) aufweist und das zweite transparente Paneel ein weiteres optisch schaltbares Paneel aufweist,
wobei die Ansteuerspannungsschaltung (20) am Rahmen angeordnet ist und
wobei die Umschalt-Schaltung (30) an dem ersten transparenten Paneel angeordnet ist.

11. Die transparente Dacheinrichtung nach Anspruch 10, wobei das zweite transparente Paneel ein segmentiertes optisch schaltbares Paneel aufweist und wobei eine weitere Umschalt-Schaltung an dem zweiten transparenten Paneel angeordnet ist.

12. Ein Fahrzeug, welches die Fahrzeugdacheinrichtung nach Anspruch 1 aufweist.

13. Das Fahrzeug nach Anspruch 12, wobei das Fahrzeug
einen Fahrzeugkörper aufweist und die transparente Dacheinrichtung einen an dem Fahrzeugkörper montierten Rahmen (5) aufweist, wobei das segmentierte optisch schaltbare Paneel (40) relativ zum Rahmen bewegbar angeordnet ist, wobei die Ansteuerspannungsschaltung an dem Fahrzeugkörper angeordnet ist und die Umschalt-Schaltung an dem segmentierten optisch schaltbaren Paneel angeordnet ist, wobei eine flexible Verkabelung (52, 52a, 52b) funktion al zwischen der Ansteuerspannungsschaltung und der Umschalt-Schaltung verbunden ist.

## Revendications

1. Ensemble toit transparent pour un toit de véhicule, l'ensemble toit transparent comprenant un panneau segmenté optiquement commutable (40), une circuiterie de tension d'entraînement (20) et une circuiterie de commutation (30), le panneau segmenté optiquement commutable comprenant au moins deux segments (41 - 44) commutables indépendamment, chaque segment comprenant un premier état optique et un second état optique différent du premier état optique,
la circuiterie de tension d'entraînement comprenant
- une borne d'entrée de tension (23a) pour recevoir une tension système ;
- une borne d'entrée de niveau de masse (23b) pour recevoir une masse système ;
- une borne de sortie de tension (24a) pour délivrer un signal de phase d'une tension d'entraînement pour commuter entre le premier état optique et le second état optique ; et
- une borne de sortie neutre (24b) pour délivrer un signal neutre de la tension d'entraînement ; et
la circuiterie de commutation étant configurée pour recevoir un signal d'instruction représentant une instruction utilisateur indiquant un état optique souhaité de chacun des segments commutables et comprenant
- une borne d'entrée de tension système (34a) pour recevoir la tension système ;
- une borne d'entrée de masse système (34b) pour recevoir la masse système ;
- une borne d'entrée de phase (33a) pour recevoir le signal de phase de la tension d'entraînement ;
- une borne d'entrée neutre (33b) pour recevoir le signal neutre de la tension d'entraînement ; et
- au moins deux bornes de sortie de circuit de commutation (35a - 35d) pour faire fonctionner sélectivement les segments commutables correspondant au signal d'instruction, dans lequel la circuiterie de commutation (30) est configurée pour commander la distribution de la tension d'entraînement par la circuiterie de tension d'entraînement (20) à la circuiterie de commutation (30).

2. Ensemble toit transparent selon la revendication 1, dans lequel la circuiterie de commutation est configurée pour connecter sélectivement la borne d'entrée neutre à la masse système ou à la tension système ; et
dans lequel la circuiterie de tension d'entraînement est configurée pour comparer une tension sur la borne de sortie neutre avec la tension système et la masse système et pour commuter la tension d'entraînement en fonction de la tension détectée sur la borne de sortie neutre.

3. Ensemble toit transparent selon la revendication 1, dans lequel l'ensemble toit transparent comprend un cadre (5), le panneau segmenté optiquement commutable étant agencé de manière mobile par rapport au cadre, dans lequel la circuiterie de tension d'entraînement est agencée sur le cadre et la circuiterie de commutation est agencée sur le panneau segmenté optiquement commutable, un câblage flexible (52a, 52b) étant couplé fonctionnellement entre la circuiterie de tension d'entraînement et la circuiterie de commutation.

4. Ensemble toit transparent selon la revendication 1, dans lequel l'ensemble toit transparent comprend un panneau d'instruction utilisateur, le panneau d'instruction utilisateur (60, 60a) étant configuré pour recevoir l'instruction utilisateur d'un utilisateur et pour générer le signal d'instruction et le panneau d'instruction utilisateur étant couplé fonctionnellement à la circuiterie de commutation pour délivrer le signal d'instruction à la circuiterie de commutation.

5. Ensemble toit transparent selon la revendication 4, dans lequel le panneau segmenté optiquement commutable comprend le panneau d'instruction utilisateur (60a).

6. Ensemble toit transparent selon la revendication 4, dans lequel
- le panneau d'instruction utilisateur est couplé électriquement à la circuiterie de tension d'entraînement pour délivrer le signal d'instruction à la circuiterie de tension d'entraînement ;
- la circuiterie de tension d'entraînement comprend une circuiterie de modulation (26), la circuiterie de modulation étant configurée pour moduler la tension d'entraînement conformément au signal d'instruction ; et
- la circuiterie de commutation comprend une circuiterie de démodulation (37) pour démoduler la tension d'entraînement pour ainsi récupérer et recevoir le signal d'instruction.

7. Ensemble toit transparent selon la revendication 6, dans lequel la circuiterie de modulation (26) module une amplitude de la tension d'entraînement.

8. Ensemble toit transparent selon la revendication 6, dans lequel la circuiterie de modulation (26) module une fréquence de la tension d'entraînement.

9. Ensemble toit transparent selon la revendication 6, dans lequel la circuiterie de modulation (26) module un rapport cyclique de la tension d'entraînement.

10. Ensemble toit transparent selon la revendication 1, dans lequel l'ensemble toit transparent comprend un cadre (5), un premier panneau transparent (2a) et un second panneau transparent (2b), le premier panneau transparent comprenant le panneau segmenté optiquement commutable (40) et le second panneau transparent comprenant un autre panneau optiquement commutable,
dans lequel la circuiterie de tension d'entraînement (20) est agencée sur le cadre, et
dans lequel la circuiterie de commutation (30) est agencée sur le premier panneau transparent.

11. Ensemble toit transparent selon la revendication 10, dans lequel le second panneau transparent comprend un panneau segmenté optiquement commutable et dans lequel une autre circuiterie de commutation est agencée sur le second panneau transparent.

12. Véhicule comprenant l'ensemble toit de véhicule selon la revendication 1.

13. Véhicule selon la revendication 12, dans lequel le véhicule comprend une carrosserie de véhicule et l'ensemble toit transparent comprend un cadre (5) monté sur la carrosserie de véhicule, le panneau segmenté optiquement commutable (40) étant agencé de manière mobile par rapport au cadre, dans lequel la circuiterie de tension d'entraînement est agencée sur la carrosserie de véhicule et la circuiterie de commutation est agencée sur le panneau segmenté optiquement commutable, un câblage flexible (52, 52a, 52b) étant couplé fonctionnellement entre la circuiterie de tension d'entraînement et la circuiterie de commutation.
